# EUROPEAN PATENT APPLICATION

(11) **EP 3 932 993 A1**
(43) Date of publication of application: **05.01.2022**
(21) Application number: 20183390.2
(22) Date of filing: 01.07.2020
(51) Int. Cl.: C08L 97/00, C08H 7/00, C07G 1/00, C09D 197/00, C09J 197/00

(54) **LIGNIN CROSSLINKED WITH A POLYUNSATURATED COMPOUND**

(71) Applicant: Ren Fuel K2B AB, 102 48 Stockholm (SE)
(72) Inventor: PIERROU, Clara, 752 40 UPPSALA (SE); OREBOM, Alexander, 757 55 UPPSALA (SE); ÖST, Amalia, 754 22 UPPSALA (SE); SAMEC, Joseph, 113 50 STOCKHOLM (SE)
(74) Representative: Brann AB

(57) **Abstract**

The present application relates to a solid material of crosslinked lignin where the lignin is crosslinked using polyunsaturated fatty acids, a composition and a method of preparing the solid material.

## Description

### FIELD OF INVENTION

The present invention relates to a renewable solid material comprising lignin crosslinked with a compound derived from polyunsaturated fatty acid and the use of the material. The invention also relates to a method of preparing a solid material of crosslinked lignin.

### BACKGROUND

There is a need for more renewable plastic materials and lignin is a potential polymer to be used. However, a problem with lignin is its lack of miscibility and compatibility with other polymers such as polyolefins.

Lignin is the most available natural polymer next to cellulose. Lignin is found in the cell walls of fibrous plants and woods along with cellulose and hemicellulose. Lignin acts as a matrix material for polysaccharides, micro-fibrils and fibres and provides strength to plant stem. It is a high molecular weight phenolic macromolecule containing three different types of monolignol monomers p-coumaryl alcohol, coniferyl alcohol and sinapyl alcohol.

WO2015/168571 discloses functionalized lignin that may be used in thermoplastics. The lignin is functionalized during reactive extraction using for example ethanol and an acid.

WO2013/050661 relates to lignin esterified with fatty acid for the production of films with improved barrier properties against oxygen and vapour. The lignin is esterified with tall oil fatty acid using acid chloride and films were made from solutions of the esterified lignin and applied to paperboard.

There is still a need for renewable cured or crosslinked polymeric materials or thermosets with good mechanical properties.

### SUMMARY OF INVENTION

The object of the present invention is to overcome the drawbacks of prior art and to provide a solid material of crosslinked lignin where the lignin is crosslinked with a crosslinking compound derived from polyunsaturated fatty acid. The present invention facilitates the production of fully renewable, environmentally friendly crosslinked lignin material.

In a first aspect the present invention relates to a solid material comprising lignin wherein the lignin is crosslinked with crosslinking compounds via hydroxyl groups on the lignin wherein the crosslinking compounds are derived from polyunsaturated fatty acid and wherein at least 30% of said hydroxyl groups have been converted to ester linkages between the lignin and the crosslinking compounds.

In a second aspect the present invention relates to a method of preparing a solid material comprising lignin wherein the lignin is crosslinked via hydroxyl groups on the lignin with a crosslinking compound derived from polyunsaturated fatty acid wherein the method comprises:
a) Providing lignin wherein at least 30% of the hydroxyl groups on the lignin are esterified with polyunsaturated fatty acid;
b) Optionally arranging the esterified lignin in a mould or a die or on a surface; and
c) Heating the esterified lignin at a curing temperature in the presence of crosslinking agent.

In a third aspect the present invention relates to a solid material obtained by the method of preparing a solid material.

In a fourth aspect the present invention relates to products or materials comprising the present solid material or material obtained by the method of the present invention such as a composite material, a coating, a laminate, a varnish or a particle board.

In a fifth aspect the present invention relates of a composition comprising lignin functionalized with polyunsaturated fatty acids via hydroxyl groups on the lignin and wherein at least 30% of said hydroxyl groups have been functionalized with polyunsaturated fatty acids via ester linkages.

### SPECIFIC EMBODIMENTS OF THE INVENTION

In a preferred embodiment of any of the aspects the crosslinking compound is derived from at least one di-unsaturated fatty acid, preferably two di-unsaturated fatty acids.

In another preferred embodiment the crosslinking compound is derived from at least one di-unsaturated fatty acid wherein the at least one di-unsaturated fatty acid is selected from linoleic acid, eicosadienoic acid and docosadienoic acid or combinations thereof, preferably linoleic acid.

In a preferred embodiment of any of the aspects the crosslinking compound is derived from two di-unsaturated fatty acids linked to each other via an ether linkage, a carbon-carbon linkage or a sulphur linkage.

In a preferred embodiment of any of the aspects the lignin is selected from Kraft lignin or lignin obtained from black liquor, organosolv lignin, acetosolv, steam exploded lignin or sulfonated lignin, preferably Kraft lignin or lignin obtained from black liquor.

In a preferred embodiment of any of the aspects 10% or more of the hydroxyl groups of the lignin are esterified with saturated and/or monounsaturated fatty acids, preferably 20% or more, but 60% or less, preferably 55% or less, more preferably 45% or less, more preferably 35% or less

In a preferred embodiment of any of the aspects 10% or more of the hydroxyl groups of the lignin are acetylated, preferably 20% or more, but 60% or less, preferably 55% or less, more preferably 45% or less, more preferably 35% or less.

In a preferred embodiment of any of the aspects 35-100% of the hydroxyl groups of the lignin have been converted to ester linkages between the lignin and the crosslinking compound, preferably 40% or more, preferably 45% or more, preferably 50% or more, more preferably 55% or more, more preferably 60% or more, more preferably 65% or more, but 100% or less, preferably 90% or less, or more preferably 80% or less.

In one embodiment of any of the aspects the lignin is also esterified with saturated and/or monounsaturated fatty acids.

In a preferred embodiment of any of the aspects of the present invention the poly unsaturated, the monounsaturated and the saturated fatty acids are derived from vegetable oils. Preferably the vegetable oils are selected from cottonseed oil, soybean oil, sunflower oil, safflower oil, hemp oil, wheat germ oil, tall oil and corn oil or a combination thereof.

In one embodiment of any of the aspects of the present invention the sum of esterification and acetylation of the hydroxyl groups is not more than 100%.

In a preferred embodiment of any of the aspects at least 50 weight% of the content in said material is renewable, preferably at least 70 weight%, more preferably at least 90 weight%, more preferably at least 95 weight%, or 100 weight% or less.

In a preferred embodiment of the first aspect the solid material is a thermoset or an elastomer.

In a preferred embodiment of the fifth aspect the composition comprises a crosslinking agent.

In a yet preferred embodiment of the fifth aspect the composition further comprises suitable accelerator and/or activating agent.

In a preferred embodiment of the second and fifth aspect the crosslinking agent is selected from oxygen gas, sulphur, peroxide or a combination thereof.

In a preferred embodiment of the second or fifth aspect the amount of crosslinking agent is preferably 0.5 to 20 phr, more preferably 1 phr or more, or more preferably 3 phr or more, or more preferably 5 phr or more but preferably 20 phr or less, more preferably 15 phr or less, more preferably 10 phr or less. In one embodiment the amount of crosslinking agent is 1-10 phr, preferably 5-10 phr.

In a preferred embodiment of the second aspect the lignin esterified with polyunsaturated fatty acid is obtained by
I. Providing lignin, preferably a catalyst and free polyunsaturated fatty acid and an esterification agent or polyunsaturated fatty acid halide;
II. Preferably mixing the lignin and the free polyunsaturated fatty acid or polyunsaturated fatty acid halide preferably followed by a reduction in pressure, where after the catalyst and the esterification agent is added;
III. Allowing the free fatty acids and the esterification agent or the fatty acid halide to esterify the lignin in the presence of the catalyst at an elevated temperature;
IV. Preferably removing catalyst and preferably also bi-products.

In a preferred embodiment of the second aspect the weight ratio between the lignin and the free polyunsaturated fatty acid is 1:0.3 to 1:5.

In a preferred embodiment of the second aspect the method comprises providing lignin, a catalyst, free polyunsaturated fatty acid and an esterification agent wherein the esterifying agent is an anhydride preferably acetic anhydride.

In a preferred embodiment of the second aspect the esterification agent is an anhydride preferably acetic anhydride.

In a preferred embodiment of the second aspect the catalyst is an esterification catalyst, preferably a nitrogen containing aromatic heterocycles preferably selected from N-methyl imidazole, pyridine, 4-methylpyridine and DMAP (4-dimethylaminopyridine).

In a preferred embodiment of the second aspect the method comprises providing lignin and polyunsaturated fatty acid halide and wherein the esterification is done preferably in the presence of a base.

In a preferred embodiment of the second aspect the elevated temperature is 150-220°C, preferably 160-210°C, more preferably 160-200°C.

In a preferred embodiment of the second aspect the curing temperature is 120-200°C, preferably 140-180°C, more preferably 160-180°C.

In a preferred embodiment of the second aspect the catalyst is removed by evaporation.

In a preferred embodiment of the second aspect at least 90 mol% preferably at least 95 mol%, more preferably at least 98 mol% of the catalyst is removed, or more preferably wherein essentially all catalyst is removed.

In a preferred embodiment of the second aspect the esterification agent is acetic anhydride and wherein the catalyst, the acetic anhydride and formed acetic acid is removed by evaporation.

In a preferred embodiment of the second aspect the curing is done in an oven or a heating chamber or in a press.

In a preferred embodiment of the second aspect the solid material obtained is the material of the first aspect.

All embodiments are applicable to all aspects and may be combined unless stated otherwise.

### BRIEF DESCRIPTION OF THE FIGURES

Figure 1, schematic view of lignin.
Figure 2, a) schematic illustration of the present invention, b) schematic illustration of the crosslinking compound.
Figure 3, Solubility of kraft lignin linoleate in LLGO.
Figure 4, a) schematic illustration of the present method, b) a schematic illustration of the esterification of lignin.
Figure 5, graph disclosing viscosity change with time during curing at 150 °C for kraft lignin esters (esterified with LA (linoleic acid), OA (oleic acid) and SA (stearic acid), respectively), in air.
Figure 6, graph disclosing viscosity change with time during curing at 150 °C of the present invention, kraft lignin esters of linoleate (67 parts) oleate (17 parts) and stearate (17 parts), under nitrogen and air.
Figure 7, graph disclosing viscosity change during curing of the present invention at various conditions: Ref = no additives; Sulfur = with ZnO, Sulfur, CBS (100:3:1,5:0,75 phr); Perox = with ZnO, cumeneperoxide and EGDA (100:3:1,5:0,75 phr) at 130 °C and 100 1/s shearrate.
Figure 8, graph disclosing viscosity change during curing of the present invention with different amounts of sulfur at 160 °C and 100 1/s shear rate.
Figure 9, TGA analysis of the present invention. Different curing times and different amount of crosslinking agent.
Figure 10, TGA analysis of the present invention. Different curing times.
Figure 11, Rheology measurements of the present invention. Different curing times and different amount of crosslinking agent.
Figure 12, Oscillation strain at LVER for the solid material of the present invention.
Figure 13, Storage modulus for the solid material of the present invention at crossover point.
Figure 14, Rheology measurements of the solid material of the present invention. C10 in air (circle) and inert atmosphere (triangle and square).

### DETAILED DESCRIPTION OF THE INVENTION

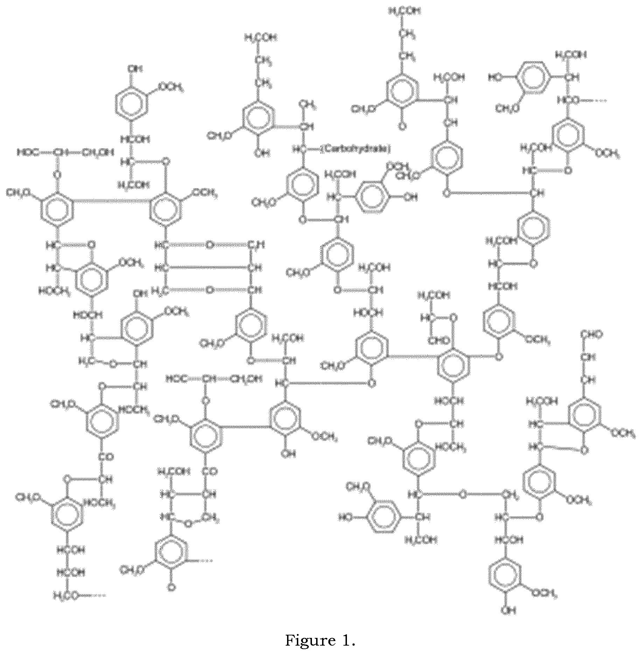

In the present application the term "lignin" means a polymer comprising coumaryl alcohol, coniferyl alcohol and sinapyl alcohol monomers. Figure 1 shows a schematic view of the lignin structure.

When calculating number of repeating units and equivalents one repeating unit of lignin is assumed to be 180 Da. The number of hydroxyl groups in the lignin is measured and calculated by preparing three stock solutions according to prior art and measured using phosphorus NMR (³¹PNMR), Varian 400MHz. On average each monomer unit contains between 1 to 1.17 hydroxyl groups.

Molecular weight in the present application is determined using GPC (Gel Permeation Chromatography) operated at 20°C and at flow rate of 1 ml/min using THF as solvent. Polystyrene Standard RedayCal Set M(p) 250-70000 (16 standards) (Sigma product no: 76552). The colons are Styragel THF (pre-colon), Styragel HR 3 THF (7.8x300 mm), Styragel HR 1 THF (7.8x300 mm), Styragel HR 0.5 THF (7.8x300 mm) all from Waters.

In the present application the term "compatibilizer" denotes a compound that promotes adhesion between polymers which otherwise are less compatible. Compatibilizers are widely used to increase the miscibility of otherwise immiscible polymers or polymers that do not mix so well.

### The solid material

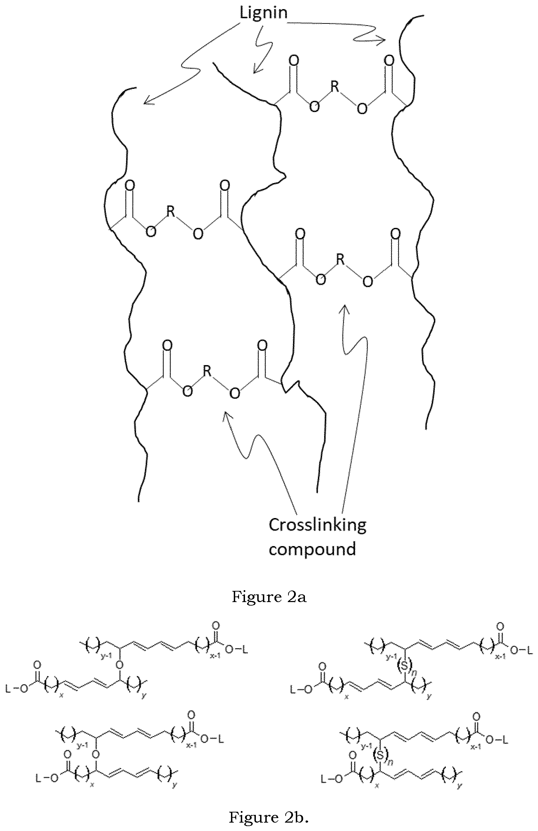

The material according to the present invention is a solid material, at room temperature, comprising lignin. The lignin of the present solid material is crosslinked with crosslinking compounds derived from polyunsaturated fatty acids. The crosslinking compounds are bound to the lignin via an ester linkage formed by an esterification reaction with the hydroxyl groups found along the lignin chain. During the esterification reaction the hydroxyl group is converted into an ester linkage between the lignin and the polyunsaturated fatty acid. Figure 2a shows a schematic illustration of the crosslinked lignin and figure 2b show illustrative structures of the crosslinking compound.

As will be described below the lignin chains are crosslinked via crosslinking compounds where each crosslinking compound is a reaction product between two polyunsaturated compounds each bound to lignin chains. The crosslinking compound is preferably derived from two polyunsaturated fatty acids bound to each other via an ether linkage, carbon-carbon linkage or sulphur linkage. The sulphur linkage could be a linkage involving one or more or two or more sulphurs such as a -S- linkage or a -S-S- linkage.

The crosslinking density or number of crosslinking compounds per lignin chain may be varied in order to adapt the mechanical properties. Crosslinking density is given as a percentage of the number of hydroxyl groups that has been converted to ester linkages between the lignin and the crosslinking compounds and is 30-100%. A higher crosslinking density is believed to result in a stiffer material with a higher elastic modulus. In one embodiment the crosslinking density or number of hydroxyl groups that has been converted to ester linkages is preferably 35 % or more, preferably 40 % or more, preferably 45% or more, more preferably 50% or more, more preferably 55% or more, more preferably 60% or more, more preferably 65% or more, but 100% or less, preferably 90% or less, or more preferably 80% or less. In another embodiment the number of hydroxyl groups of the lignin that have been converted to ester linkages is 50-75%. The remaining hydroxyl groups, the non-esterified hydroxyl groups, on the lignin may be fully or partly acetylated. In one embodiment 10% or more of the hydroxyl groups of the lignin are acetylated, preferably 20% or more with proviso that the total amount of converted hydroxyl groups cannot be more than 100%, preferably 60% or less are acetylated, preferably 55% or less, more preferably 45% or less, more preferably 35% or less. Without being bound by theory acetylated groups are believed to make the solid material softer i.e. lower elastic modulus.

The lignin according to the present invention may be Kraft lignin (lignin obtained from the Kraft process), sulfonated lignin, Lignoboost^{®} lignin, precipitated lignin, filtrated lignin, acetosolv lignin or organosolv lignin. In one embodiment the lignin is Kraft lignin. An advantage of using Kraft lignin is that it is readily available.

The weight average molecular weight (mass) (M_{w}) of the non-crosslinked lignin according to the present invention may be 30,000 g/mol or less, such as not more than 20,000 g/mol, or not more than 10,000 g/mol, or not more than 5,000 g/mol, or not more than 4,000 g/mol, but preferably higher than 1,000 g/mol, or higher than 1,200 g/mol, or higher than 1,500 g/mol, or higher than 2,500g/mol. In one embodiment the number average molecular weight (Mₙ) of the lignin is between 1,000 and 4,000 g/mol, or between 1,500 and 3,500 g/mol.

What the present inventors found was that by using crosslinking compounds having more than one unsaturated group it resulted in fast curing and materials with good mechanical properties. Therefore, the crosslinking compound is polyunsaturated comprising three or more unsaturated groups such as carbon-carbon double bonds. In a preferred embodiment the crosslinking compound comprises four unsaturated groups.

In order to create a sufficient distance and thereby good mechanical properties the crosslinking compound is preferably a C24 or longer compound, more preferably a C28 or longer compound, more preferably a C32 or longer compound, more preferably C36 or longer compound.

By using crosslinking compounds from renewable sources the crosslinked lignin becomes fully or essentially renewable. Therefore, in a preferred embodiment the crosslinking compound is derived from natural fatty acids such as fatty acids from plants or animal fat. Fatty acids as crosslinking compounds makes the material renewable and preferred fatty acids are linoleic acid, linolenic acid, eicosadienoic acid and docosadienoic acid or a combination thereof. Linoleic acid or linolenic acids are preferred since they are readily available and are found in vegetable oils.

The lignin may further be esterified with saturated and/or monounsaturated fatty acids. These fatty acids are also preferably derived from vegetable oils.

Preferably the vegetable oils are selected from cottonseed oil, soybean oil, sunflower oil, safflower oil, hemp oil, wheat germ oil and corn oil or a combination thereof.

In a preferred embodiment 50 weight% of the content in said material is renewable, preferably at least 70 weight%, more preferably at least 90 weight%, more preferably at least 95 weight%, or 100 weight% or less. This is of course a result of that the material comprises lignin but also that the crosslinking compound is derived from a renewable source i.e. fatty acids from plants or animal fat.

The solid material according to the present invention may comprise suitable additives well-known to the person skilled in the art such as fillers, compatibilizer, lubricant, softener, anti-degradants, anti-oxidants, colour, scent and so on.

Still the solid material may be free or essentially free from any additives such as compatibilizer, lubricants, softener, anti-degradants etc. In one embodiment the amount of additives is less than 20 weight%, or less than 10 weight%, or less than 7 weight%, or less than 5 weight%, or less than 3 weight%, or less than 1 weight% but preferably 0.25 weight% or more, or 0.5 weight% or more. In another embodiment the amount of additive is 3-10 weight%. Further, the material is preferably essentially free from any catalyst used during the esterification. Since many additives are not renewable or environmentally friendly, sometimes even toxic, it is preferred that the amount of additives is as low as possible.

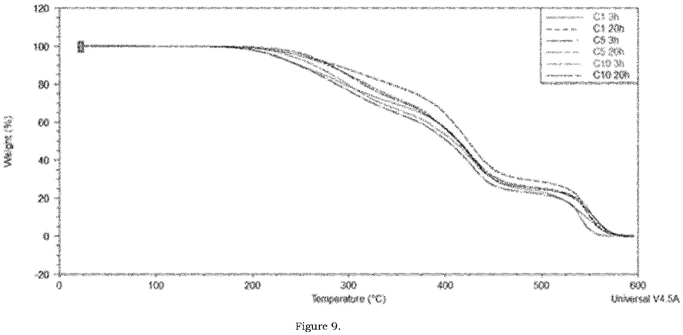

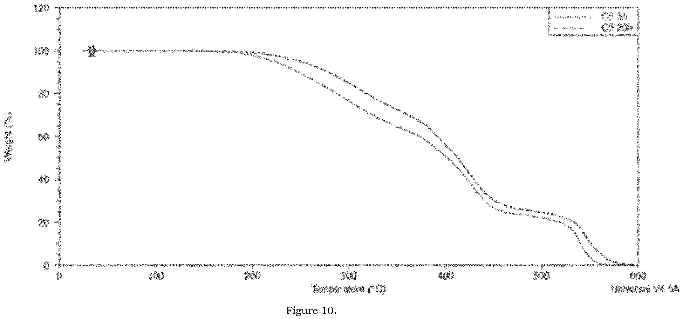

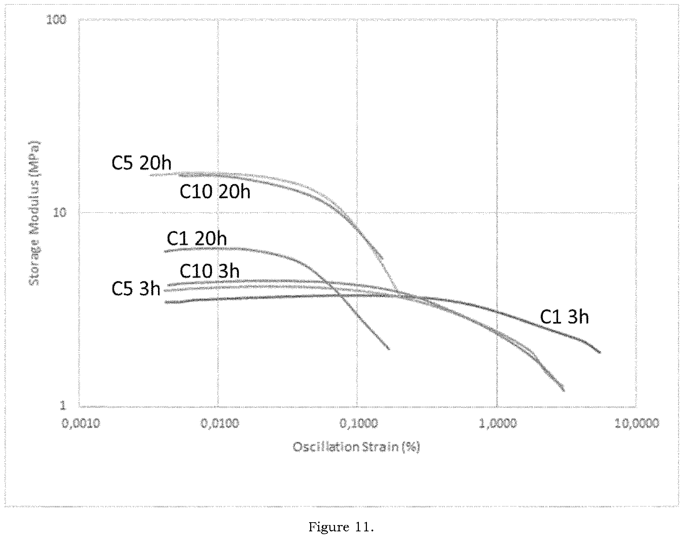

Another advantage of the present solid material is the mechanical properties and that the material on its own has sufficient mechanical properties. As seen in Figure 11, 13 and 14 the present material exhibits a high storage modulus. Also, the material shows good thermal stability properties as seen in Figure 9 and 10.

### The composition

The composition according to the present invention comprises esterified lignin where the lignin is esterified with polyunsaturated fatty acid. As disclosed herein said composition is suitable to form cured or crosslinked solid materials.

An advantage of the present composition is that it cures fast and forms materials with good mechanical properties and the material is essentially renewable.

By having crosslinking agent in the composition and preferably also a suitable accelerator and optionally also an activator the composition may be used directly.

Oxygen gas, sulphur or peroxide are preferred crosslinking agents since the curing is unexpectedly fast. When using sulphur as the crosslinking agent oxygen is preferably also added or present during the curing. It is believed that the oxygen may act as an activator.

The amount of crosslinking agent is preferably 0.5 to 20 phr, more preferably 1 phr or more, or more preferably 3 phr or more, or more preferably 5 phr or more but preferably 20 phr or less, more preferably 15 phr or less, more preferably 10 phr or less. In one embodiment the amount of crosslinking agent is 1-10 phr, preferably 5-10 phr. Higher amounts of crosslinking agent reduce the curing time and is believed to result in more thermally stable materials.

Suitable accelerators are well-known to the skilled person but a non-limiting list is benzothiazole-, thiuram-, dithiocarbamate- and guanidine-based accelerators. A person skilled in the art further knows suitable activators and a non-limiting list of such suitable activators is zinc oxide (ZnO), zinc fatty acid ester, magnesium, calcium and ethyleneglycol dimethacrylate.

A skilled person knows what accelerators are suitable but a preferred accelerator is N-cyclohexyl-2-benzothiazole sulfenamide (CBS).

The amount of accelerator in the composition is preferably 0.01 to 5 phr (parts per hundred) preferably 1 to 4 phr. The amount of activator is preferably 0.01 to 5 phr (parts per hundred), preferably 0.5 to 3 phr.

A surface may be coated or the composition may be mixed with fibres or particles followed by the curing step as disclosed herein.

As disclosed above, in one embodiment 35-100% of the hydroxyl groups of the lignin have been converted to ester linkages between the lignin and the polyunsaturated fatty acid, preferably 40% or more, preferably 45% or more, preferably 50% or more, more preferably 55% or more, more preferably 60% or more, more preferably 65% or more, but 100% or less, preferably 90% or less, or more preferably 80% or less. A higher degree of conversion leads to faster curing and more rigid obtained solid material.

The lignin of the composition may be esterified with saturated and/or monounsaturated fatty acids. In one embodiment 10% or more of the hydroxyl groups of the lignin are esterified with saturated and/or monounsaturated fatty acids, preferably 20% or more, but 60% or less, preferably 55% or less, more preferably 45% or less, more preferably 35% or less.

The lignin of the composition may be acetylated. In one embodiment 10% or more of the hydroxyl groups of the lignin are acetylated, preferably 20% or more, but 60% or less, preferably 55% or less, more preferably 45% or less, more preferably 35% or less.

The fatty acids are preferably derived from vegetable oils and preferably the vegetable oils are selected from cottonseed oil, soybean oil, sunflower oil, safflower oil, hemp oil, wheat germ oil and corn oil or a combination thereof.

Considering that the composition is semi-solid or solid at room temperature it is preferred that it is heated or melted when used in order to facilitate proper mixing and easy use.

### Use of the solid material or the composition

The solid material or the composition according to the present invention may be used in any suitable application where a thermoset or an elastomer is needed. A non-limiting list of applications is coating, varnish, particle board and fibre composite.

By curing the composition or the lignin where at least 30% of the hydroxyl groups on the lignin are esterified with polyunsaturated fatty acid in the presence of fibres such as carbon fibres or glass fibres or in the presence of particles such as wood particles a fibre composite or a particles board may be prepared.

A coating or laminate comprising the present solid material may also be prepared. For example the composition according to the present invention may be mixed and applied to paper or cardboard where after the mixture is cured as disclosed herein.

When mixing the present composition with fibres to make a fibre composite any trapped air is preferably removed.

Particle boards may be prepared by mixing the present composition with particles preferably wood particles. A pressure is then applied to the mixture and the mixture is cured during heating.

The curing is preferably done at 120-200°C, more preferably 140-180°C, more preferably 160-180°C. Pressure may be applied during curing.

The material may have any possible shape or structure and may be used in any product in which a thermoset or an elastomer is needed.

### Method of preparing a solid material

The present inventors surprisingly found that lignin could be treated first by esterification with polyunsaturated fatty acid followed by a polymerization or crosslinking step where the polyunsaturated fatty acids bound to the lignin react with each other.

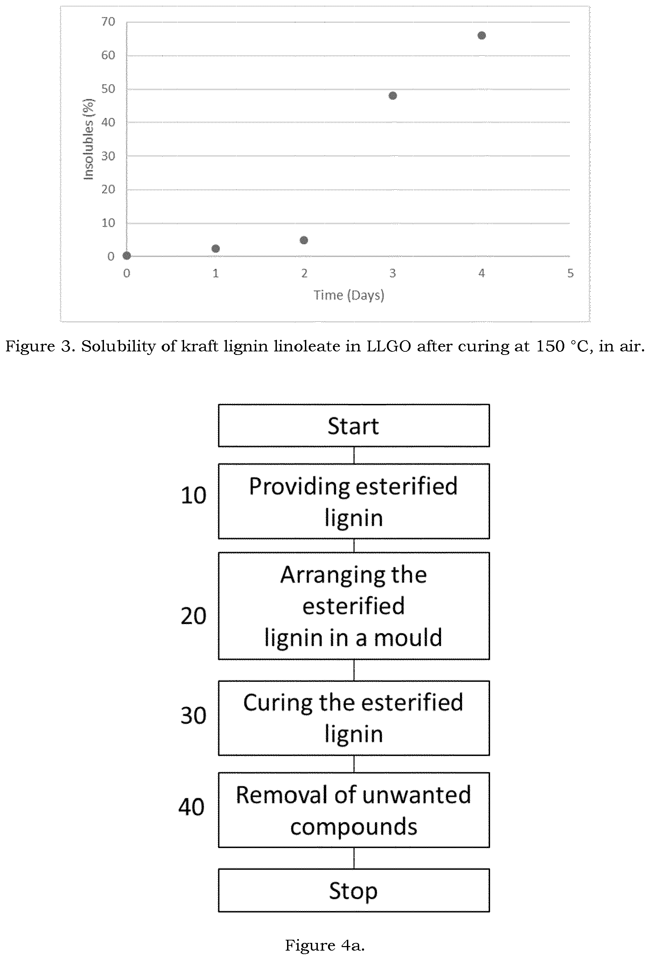

Turning now to figure 4a. A solid material is prepared according to the present method by providing lignin wherein at least 30% of the hydroxyl groups on the lignin are esterified with polyunsaturated fatty acid (10). Prior to curing the esterified lignin may be arranged in a mould or a die having the shape or form of the wanted product or it may be arranged on a surface (20) and the esterified lignin is cured or crosslinked in the presence of a crosslinking agent (30). Any unwanted compounds such as catalysts, esterification agents, bi-products and so on may be removed prior to, during or after the curing (40).

Step (10). Providing of esterified lignin may be done as disclosed herein below.

Step (20). The provided esterified lignin may be arranged in a mould or a die or mixed with other compounds such as polymers or fibres. Before mixing with other compounds such as particles or fibres the esterified lignin may be heated or melted in order to facilitate proper mixing. Obtained mixture may then be arranged into the wanted shape or structure prior to the curing step.

Step (30). The provided esterified lignin is then heated or melted, unless already heated or melted, and the crosslinking agent together with optional accelerator and activator and optional additives are added. The obtained mixture is then heated at a curing temperature preferably in the presence of crosslinking agent which preferably is oxygen gas, sulphur or peroxide or a combination thereof. The curing temperature is preferably 120-200°C, more preferably 140-180°C and the heating step at the curing temperature is until a sufficient degree of crosslinking has been reached. The temperature provides sufficiently fast curing without degrading the material.

Crosslinking agents such as oxygen, sulphur or peroxide makes the curing much faster in comparison with curing without any crosslinking agent. Preferably sulphur or peroxide is used since then the curing is unexpectedly fast. When using sulphur as the crosslinking agent oxygen is preferably also added or present during the curing. It is believed that the oxygen may act as an activator. Any suitable sulphur or sulphur source may be used such as elementary sulphur or tetramethylthiuram disulfide (TMTD). Any suitable peroxide may be used such as dicumeneperoxide, 2,5-di(tert-butylperoxy)-2,5-dimethyl-3-hexyne, 2,5-dimethyl-2,5-di(tert-butylperoxy)hexane, di-(2-tert-butylperoxyisopropyl)benzene, butyl 4,4-di(tert-butylperoxy)valerate, 1,1 -di(tert-butylperoxy)-3,3,5-trimethylcyclohexane.

The amount of crosslinking agent is preferably 0.5 to 20 phr (parts per hundred), more preferably 1 phr or more, or more preferably 3 phr or more, or more preferably 5 phr or more but preferably 20 phr or less, more preferably 15 phr or less, more preferably 10 phr or less. In one embodiment the amount of crosslinking agent is 1-10 phr, preferably 5-10 phr. Higher amounts of crosslinking agent reduce the curing time and is believed to result in more thermally stable materials.

Suitable accelerators are well-known to the skilled person but a non-limiting list is benzothiazole-, thiuram-, dithiocarbamate- and guanidine-based accelerators. A person skilled in the art further knows suitable activators and a non-limiting list of such suitable activators is zinc oxide (ZnO), zinc fatty acid ester, magnesium, calcium and ethyleneglycol dimethacrylate.

A skilled person knows what accelerators are suitable but a preferred acccelerator is N-cyclohexyl-2-benzothiazole sulfenamide (CBS).

The amount of accelerator in the composition is preferably 0.01 to 5 phr (parts per hundred) preferably 1 to 4 phr. The amount of activator is preferably 0.01 to 5 phr (parts per hundred), preferably 0.5 to 3 phr.

Step (40). Unwanted compounds such as catalysts or any unwanted bi-products or reagents remaining for example from the esterification reaction may be removed during the curing step.

Depending on the thickness of the material heated, the presence of any crosslinking agent, the degree of esterification and the presence of any additive the heating at the curing time may vary. In one embodiment a crosslinking agent is present and the heating at the curing temperature is done for at least 5 minutes, or preferably at least 10 minutes, or at least 30 minutes or at least 1 hour, or at least 2 hours. In another embodiment no crosslinking agent is present the heating is done for at least 2 hours, preferably at least 5 hours, preferably at least 10 hours, preferably at least 24 hours, more preferably at least 36 hours, more preferably at least 48 hours. In a preferred embodiment the esterified lignin is heated at the curing temperature in an oven or a heating chamber. An advantage of the present method is that it can be conducted in air since the oxygen in the air is used in the reaction.

Without being bound by theory but it is believed that during the heating at the curing temperature the polyunsaturated compounds bound to the lignin react and polymerize or crosslink.

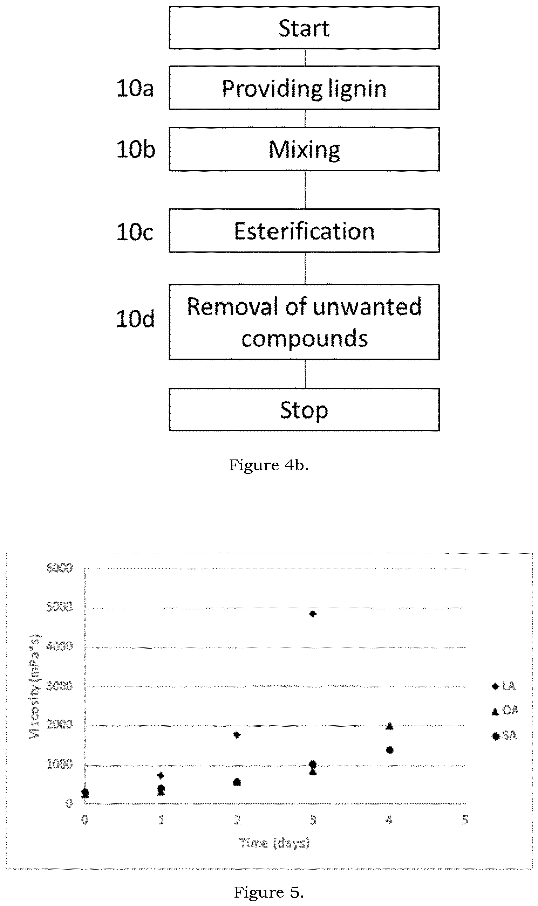

Referring now to Figure 4b. Providing of the esterified lignin (10) encompass esterification of lignin (10a-10d). Esterification of lignin is well-known and may be performed in any suitable way for example by using an esterification agent such as anhydrides or by using fatty acid halides. In general, the esterification of the lignin is done by having the hydroxyl groups on the lignin react with an esterification agent or the fatty acid halide resulting in lignin bound to said agent via the hydroxyl group that has been converted to an ester linkage.

Step (10a). The method of esterifying lignin with the polyunsaturated fatty acid may be done by providing lignin, preferably a catalyst and, free polyunsaturated fatty acid and an esterification agent or polyunsaturated fatty acid halide. Step (10b). Mixing of the reagents and preferably the lignin and the free polyunsaturated fatty acid or polyunsaturated fatty acid halide are first mixed, preferably followed by a reduction in pressure (preferably 100 mbar or lower, such as 50 mbar or lower, or 20 mbar or lower), where after the catalyst and the esterification agent is added. Step (10c). Esterifying the lignin with the free fatty acid and the esterification agent or fatty acid halide in the presence of the catalyst at an elevated temperature. Step (10d). Unwanted compounds such as catalyst, formed bi-products and esterification agent are preferably removed. In one embodiment the unwanted compounds are removed during the curing or crosslinking of the esterified lignin, hence step (40) and (10d) are the same.

In one embodiment at least 90 mol% preferably at least 95 mol%, more preferably at least 98 mol% of the catalyst is removed, or more preferably essentially all catalyst is removed.

In one embodiment free saturated and/or monounsaturated fatty acids are also present during the esterification.

In one embodiment lignin is esterified using an acid halide using well-known protocols. The acid halide may be an acid chloride and a catalyst and/or a base may be present during the esterification. Fatty acid halide such as fatty acid chloride may be prepared by using thionyl chloride according to any suitable method. A base is suitable used and preferably triethyl amine. The polyunsaturated acid halide is preferably linoleic acid halide, linolenic halide eicosadienoic acid halide, docosadienoic acid halide. The esterification may be done in a suitable solvent such as dioxane, pyridine or DMF (dimethyl formamide). When using an acid halide the esterification may be done at an elevated temperature of 20-100°C, preferably 40-70°C.

In another embodiment the lignin is esterified using anhydride as the esterification agent such as acetic anhydride. In another embodiment the lignin is esterified using a polyunsaturated fatty acid comprising an anhydride group, i.e. a polyunsaturated fatty acid anhydride. An esterifying catalyst is preferably also used and is preferably a nitrogen containing aromatic heterocycles preferably selected from N-methyl imidazole, pyridine, 4-methylpyridine and DMAP (4-dimethylaminopyridine). The free polyunsaturated fatty acid is preferably a di-unsaturated fatty acid preferably selected from linoleic acid, linolenic acid, eicosadienoic acid, docosadienoic acid, preferably linoleic acid. The esterification when using anhydride may be done at an elevated temperature of 150-220°C, preferably 160-200°C.

Lignin and free polyunsaturated fatty acid are first mixed preferably during heating, preferably 100-150°C and at reduced pressure, preferably 50mbar or lower. Thereafter the catalyst and the esterification agent e.g. the anhydride, are added and the temperature is raised to the elevated temperature of 150-200°C, preferably 160-190°C. The reaction mixture is allowed to reflux during a suitable period of time before the pressure is reduced again to removing catalyst, formed bi-products and preferably also the esterification agent.

Depending on the ratio between the number of hydroxyl groups on the lignin and the amount of free polyunsaturated fatty acid or polyunsaturated fatty acid halide the degree of functionalization or esterification is obtained. The weight ratio between the lignin and the free polyunsaturated fatty acid is 1:0.3 to 1:5. When using anhydride, the anhydride is preferably used in molar excess to the fatty acid.

The free fatty acids such as the polyunsaturated fatty acids are preferably derived from vegetable oils. Preferably the vegetable oils are selected from cottonseed oil, soybean oil, sunflower oil, safflower oil, hemp oil, wheat germ oil, tall oil and corn oil or a combination thereof. Since the fatty acids of vegetable oils are in the form of triglycerides they are hydrolyzed in order to obtain the free fatty acids.

By removing any catalyst, remaining reagents such as esterification agent and/or formed bi-products such as acids or salt prior to the heating of the esterified lignin at the second temperature the purity of the final product is higher. It is easier to remove said compounds prior to the crosslinking. The esterified lignin may be purified by any suitable technique such as evaporation, precipitation, liquid-liquid extraction etc. Preferably the catalyst, bi-products and/or esterification agent are removed at reduced pressure and during heating. The pressure is suitably 100mbar or lower, such as 50mbar or lower, or 20 mbar or lower and the temperature is preferably 150-220°C, more preferably 160-200°C

In one embodiment at least 90 mol% preferably at least 95 mol%, more preferably at least 98 mol% of the catalyst is removed, or more preferably essentially all catalyst is removed. When the esterification is done by the use of an anhydride the catalyst, excess of acetic anhydride and formed acetic acid is preferably essentially removed by evaporation.

Any additives may be added prior to, during or after the esterification step. The addition may be done using any suitable technique depending on the nature of the additive.

The obtained product is a solid material comprising lignin crosslinked with polyunsaturated crosslinking compounds.

### EXAMPLES

### Example 1

General procedure of kraft lignin ester preparation: In a 2 L round bottomed flask equipped with a mechanical stirrer was added dry kraft lignin (200.0 g) and a fatty acid (320.0 g). Pressure was lowered to 20 mbar, temperature was increased to 130 °C and suspension was stirred for 30 minutes. A mixture of acetic anhydride (140.0 g) and 4-methylpyridine (30.0 g) was added over 12 minutes and temperature of oil bath was raised to 200 °C. The reaction was refluxed for 45 minutes and then pressure was lowered over 1.5 hours to 20 mbar to distil off acetic acid and methylpyridine. Reaction was further continued for 1 hour at 20 mbar to afford a homogenous liquid.

### Example 2

Preparation of kraft lignin linoleate: In a 60 L reactor with mechanical stirrer was added dry kraft lignin (2.3 kg) and technical linoleic acid (3.68 kg, 58 % purity). Pressure was lowered to 20 mbar, temperature in heating mantle was increased to 130 °C and suspension was stirred for 30 minutes. A mixture of acetic anhydride (1.61 kg) and 4-methylpyridine (0.35 kg) was added over 5 minutes and temperature of heating mantle was increased to 190 °C. After the reaction mixture temperature reached 156 °C the reaction was refluxed for 1 hour and then pressure was lowered over 1.5 hours to 20 mbar to distil off acetic acid and methylpyridine. Reaction was further continued for 1 hour at 20 mbar to afford a homogenous liquid.

### Example 3

Curing of kraft lignin esters at 150 °C: Kraft lignin esters were heated in air or nitrogen at 150 °C, viscosity and solubility in LLGO (light fraction of light gas oil) was measured during 4 days. Results are summarised in Figures 3, 5-6.

The kraft lignin ester of linoleic acid becomes less soluble in LLGO, Figure 3, where the insolubility indicates a higher degree of crosslinking.

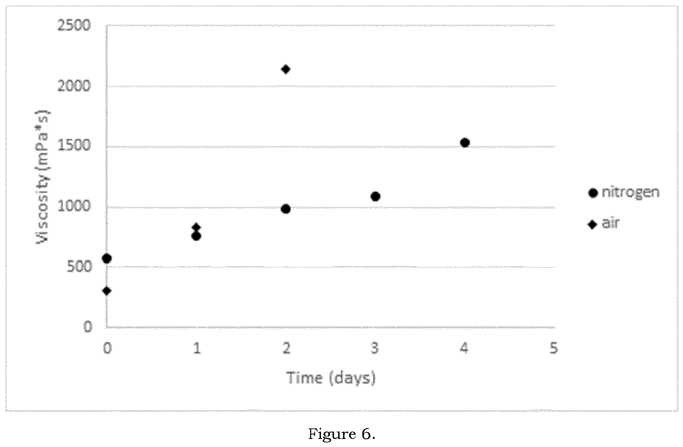

Further, viscosity changes were compared with a mixture of kraft lignin esters (linoleic:oleic:stearic 67:17:17) under air atmosphere versus nitrogen, Figure 5 and 6. The viscosity increased very slow under inert atmosphere. The curing reactions were performed in a viscometer from Anton Paar: RheolabQC, C-PTD 180/AIR/QC using cylinder B-CC10 in air.

### Example 4

The curing reactions were performed in a viscometer from Anton Paar: RheolabQC, C-PTD 180/AIR/QC using cylinder B-CC10 in air.

### A) Sulfur mediated curing

### i) Sulfur mediated curing with promoters/accelerators

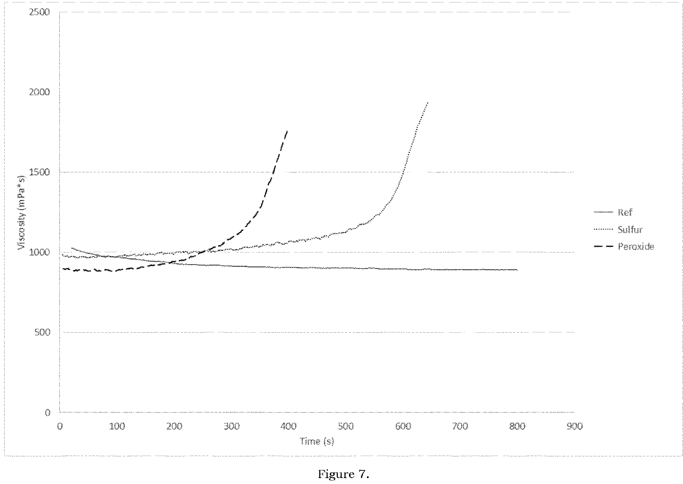

The linoleic acid ester of kraft lignin (10.00 g) was melted at 90 °C and to the melt was added ZnO (0.30 g, <100 nm), sulfur (0.15 g) and N-Cyclohexyl-2-benzothiazole sulfenamide (CBS) (75 mg), respectively. The mixture was stirred vigorously for 5 minutes and cooled to room temperature. A sample was taken for measurement of viscosity at 130 °C and shear rate of 100 1/s, see Figure 7.

### ii) Sulfur mediated curing without promoters/accelerators

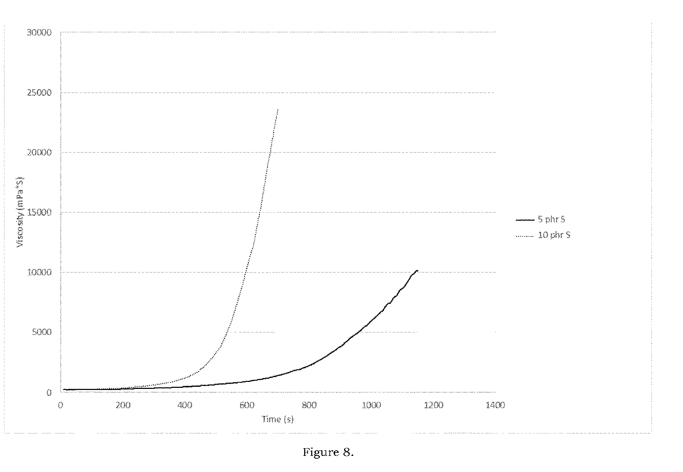

The linoleic acid ester of kraft lignin (10.00 g) was melted at 130 °C and to the melt was added sulfur (0.50 or 1,00 g). The mixture was stirred vigorously for 5 minutes and cooled to room temperature. A sample was taken for measurement of viscosity at 160 °C and shear rate of 100 1/s, see Figure 8.

### iii) Evaluation of Sulfur mediated curing samples

Samples containing 1, 5 and 10 phr sulfur, prepared according to Example 4A) ii) was cured in 150 °C in 3 h and 20 h respectively. The resulting 6 samples where then evaluated with respect to thermal and mechanical properties. Denotion: C1 = 1 phr sulfur, C5 = 5 phr sulfur, C10 = 10 phr sulfur.

TGA analysis was performed for all samples using a A TGA Q500 instruments, see figure 9 and 10. Instrument settings shown in Table 1.

**Table 1: Instrument setting parameters**

| Program | Ramp |
|---|---|
| T initial | Room temperature (∼25°C) |
| T max | 600°C |
| Temperature increase | 10 °C/min |

All samples cured for 20 h show lower weight loss at increased temperatures (see area 250-400 C in figure 9 and 10) due to increased crosslinking resulting in a structure harder to degrade as a consequence of increased interactions within the structure of the material.

Rheology analysis was performed for all samples using a Discovery HR-2 rheometer with a stainless-steel Peltier plate, where both 8mm and 12mm diameters were utilized to match the sample diameter. The samples were stored in a cooling temperature of about 8°C before the analysis and were let to sit in room temperature for 30 minutes before being fitted between the two plates into the rheology meter. The settings for the rheology meter was set to an oscillatory amplitude strain sweep with a linear mode. The strain sweep ranged from 0.002667% to 50%, with a frequency of 1Hz, and the sample points were set to 10 per decade. The axial force was first set to 5N.

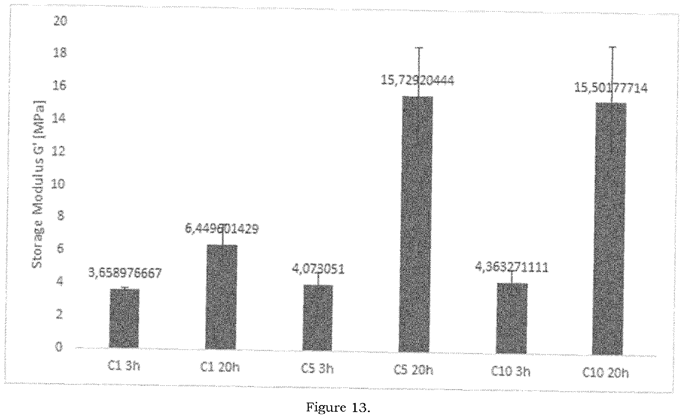

As seen in Figure 11 and Figure 13, for the samples with a longer curing time, a higher storage modulus was obtained. The materials became stiffer with longer curing time, and the trend also show that with increased amount of curing agent the material become stiffer (higher storage modulus). The materials with shorter curing time show higher elasticity.

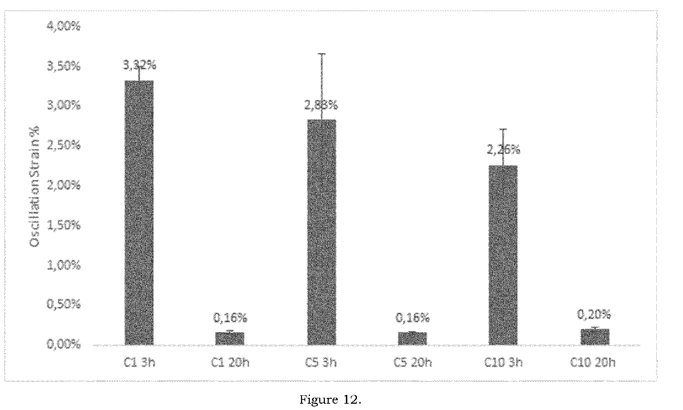

Figure 12 further shows that a higher oscillation strain was achieved for samples with a shorting curing time, and lower amount of added curing agent. High oscillation strain indicates a more elastic, but less stiff material.

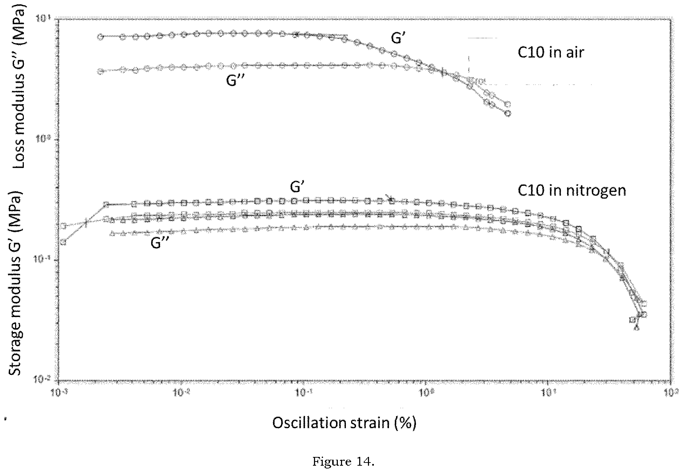

Figure 14 shows that using sulphur as a curing agent, a much higher storage modulus for the samples were achieved in oxygen atmosphere compared to an inert atmosphere. Curing in inert atmosphere were done in duplicates.

### B) Peroxide mediated curing

i) Peroxide mediated curing: The linoleic acid ester of Kraft lignin (10.00 g) was melted at 90 °C and to the melt was added ZnO (0.30 g, <100 nm), dicumeneperoxide (DCP) (0.15 g) and ethyleneglycol dimethacrylate (EGDA) (80 µl). The mixture was stirred vigorously for 5 minutes and cooled to room temperature. A sample was taken for measurement of viscosity at 130 °C and shear rate of 100 1/s, see Figure 7.
ii) Reference: A sample of the linoleic acid ester of Kraft lignin without additives was aged under same conditions in viscometer.

All samples were cured in air.

### C) Oxygen mediated curing

Curing in air: Linoleic acid ester of Kraft lignin (50 g) was poured while hot (ca 140 °C) into silicone moulds 6x8 cm and left in oven at 150 °C for 4 days. On cooling to room temperature a solid material was obtained, Figure 7.

## Claims

1. A solid material comprising lignin wherein the lignin is crosslinked with crosslinking compounds via hydroxyl groups on the lignin wherein the crosslinking compounds are derived from polyunsaturated fatty acid and wherein at least 30% of said hydroxyl groups have been converted to ester linkages between the lignin and the crosslinking compounds.

2. The solid material according to claim 1 wherein the crosslinking compound is derived from at least one di-unsaturated fatty acid, preferably two di-unsaturated fatty acids.

3. The solid material according to claim 1 or 2 wherein the crosslinking compound is derived from at least one di-unsaturated fatty acid and wherein the at least one di-unsaturated fatty acid is selected from linoleic acid, eicosadienoic acid and docosadienoic acid or combinations thereof, preferably linoleic acid.

4. The solid material according to claim 2 or 3 wherein the crosslinking compound is derived from two or more di-unsaturated fatty acids linked to each other via an ether linkage, a carbon-carbon linkage or a sulphur linkage.

5. The solid material according to any one of the preceding claims wherein the lignin is selected from Kraft lignin or lignin obtained from black liquor, organosolv lignin, acetosolv, steam exploded lignin or sulfonated lignin, preferably Kraft lignin or lignin obtained from black liquor, more preferably precipitated Kraft lignin, more preferably acid precipitated Kraft lignin.

6. The solid material according to any one of the preceding claims wherein 35-100% of the hydroxyl groups of the lignin have been converted to ester linkages between the lignin and the crosslinking compound, preferably 40% or more, preferably 45% or more, preferably 50% or more, more preferably 55% or more, more preferably 60% or more, more preferably 65% or more, but 100% or less, preferably 90% or less, or more preferably 80% or less.

7. The solid material according to any one of the preceding claims wherein 10% or more of the hydroxyl groups of the lignin are acetylated, preferably 20% or more, but 60% or less, preferably 55% or less, more preferably 45% or less, more preferably 35% or less.

8. The solid material according to any of the preceding claims wherein at least 50 weight% of the content in said material is renewable, preferably at least 70 weight%, more preferably at least 90 weight%, more preferably at least 95 weight%, or 100 weight% or less.

9. A composition comprising lignin functionalized with polyunsaturated fatty acids via hydroxyl groups on the lignin and wherein at least 30% of said hydroxyl groups have been functionalized with polyunsaturated fatty acids via ester linkages.

10. The composition according to claim 9 wherein the composition further comprises a crosslinking agent preferably selected from oxygen gas, sulphur and peroxide or a combination thereof and preferably also a suitable accelerator and/or a suitable activating agent.

11. The composition according to claim 9 or 10 wherein 35-100% of the hydroxyl groups of the lignin have been functionalized, preferably 40% or more, preferably 45% or more, preferably 50% or more, more preferably 55% or more, more preferably 60% or more, more preferably 65% or more, but 100% or less, preferably 90% or less, or more preferably 80% or less.

12. The composition according to any one of claim 9 to 11 wherein 10% or more of the hydroxyl groups of the lignin are acetylated, preferably 20% or more, but 60% or less, preferably 55% or less, more preferably 45% or less, more preferably 35% or less.

13. The composition according to any one of claim 9 to 12 wherein the polyunsaturated fatty acids are selected from linoleic acid, eicosadienoic acid and docosadienoic acid or a combination thereof, preferably linoleic acid.

14. A method of preparing a solid material comprising lignin wherein the lignin is crosslinked via hydroxyl groups on the lignin with a crosslinking compound derived from polyunsaturated fatty acid wherein the method comprises:
a) Providing lignin wherein at least 30% of the hydroxyl groups on the lignin are esterified with polyunsaturated fatty acid;
b) Optionally arranging the esterified lignin in a mould or a die or on a surface; and
c) Heating the esterified lignin at a curing temperature in the presence of crosslinking agent.

15. The method according to claim 14 wherein the crosslinking agent is selected from oxygen gas, sulphur, peroxide or a combination thereof.

16. The method according to claim 14 or 15 wherein the heating at the curing temperature is done also in the presence of suitable accelerator and/or activating agent.

17. The method according to any one of claim 14 to 16 wherein the lignin esterified with polyunsaturated fatty acid is obtained by
I. Providing lignin, preferably a catalyst and free polyunsaturated fatty acid and an esterification agent or polyunsaturated fatty acid halide;
II. Preferably mixing the lignin and the free polyunsaturated fatty acid or polyunsaturated fatty acid halide preferably followed by a reduction in pressure, where after the catalyst and the esterification agent is added;
III. Allowing the free fatty acids and the esterification agent or the fatty acid halide to esterify the lignin in the presence of the catalyst at an elevated temperature;
IV. Preferably removing catalyst and preferably also bi-products.

18. The method according to claim 17 wherein the method comprises providing lignin, a catalyst, free polyunsaturated fatty acid and an esterification agent wherein the esterification agent is an anhydride preferably acetic anhydride.

19. The method according to claim 17 or 18 wherein the catalyst is an esterification catalyst, preferably a nitrogen containing aromatic heterocycles preferably selected from N-methyl imidazole, pyridine, 4-methylpyridine and DMAP (4-dimethylaminopyridine).

20. The method according to claim 17 wherein the method comprises providing lignin and polyunsaturated fatty acid halide and wherein the esterification is done preferably in the presence of a base.

21. The method according to any one of claim 17 wherein the elevated temperature is 150-220°C, preferably 160-210°C, more preferably 160-200°C.

22. The method according to any one of claim 14 to 21 wherein the curing temperature is 120-200°C, preferably 140-180°C, more preferably 160-180°C.

23. The method according to any one of claim 14 to 22 wherein the catalyst is removed by evaporation.

24. The method according to any one of claim 14 to 23 wherein at least 90 mol% preferably at least 95 mol%, more preferably at least 98 mol% of the catalyst is removed, or more preferably wherein essentially all catalyst is removed.

25. The method according to any one of claim 14 to 24 wherein the curing is done in an oven or a heating chamber or in a press.

26. The method according to any one of claim 14 to 25 wherein 35-100% of the hydroxyl groups of the lignin have been converted to ester linkages between the lignin and the crosslinking compound, preferably 40% or more, preferably 45% or more, preferably 50% or more, more preferably 55% or more, more preferably 60% or more, more preferably 65% or more, but 100% or less, preferably 90% or less, or more preferably 80% or less.

27. A composite material comprising the solid material according to any one of claims 1 to 8 or the material obtained by the method according to any one of claim 14-26 and fibres, preferably glass fibre or carbon fibre.

28. A coating or laminate comprising the solid material according to any one of claims 1 to 8 or the material obtained by the method according to any one of claim 14-26.

29. A particleboard comprising the solid material according to any one of claims 1 to 8 or the material obtained by the method according to any one of claim 14-26.
